Europäisches Patentamt

European Patent Office

Office européen des brevets

(11) Veröffentlichungsnummer: **0 348 354**
**A1**

(12) # EUROPÄISCHE PATENTANMELDUNG

(21) Anmeldenummer: **89810471.6**

(22) Anmeldetag: **19.06.89**

(51) Int. Cl.⁴: **G 02 B 27/22**

(30) Priorität: **21.06.88 CH 2377/88**

(43) Veröffentlichungstag der Anmeldung:
**27.12.89 Patentblatt 89/52**

(84) Benannte Vertragsstaaten: **DE FR GB SE**

(71) Anmelder: **KERN & CO. AG**
**CH-5001 Aarau (CH)**

**GEMS OF CAMBRIDGE LTD.**
**Unit J1 Cherry Hinton Road**
**Cambridge CB1 4DH (GB)**

(72) Erfinder: **Schneeberger, Hansjörg**
**Zelglistrasse 1290**
**CH-4805 Brittnau (CH)**

**Cogan, Luis**
**Weiherstrasse 606**
**CH-5015 Niedererlinsbach (CH)**

**Gibson, Alan**
**Unit J1 - The Paddocks 347 Cherry Hinton Road**
**Cambridge CB1 4DH (GB)**

(74) Vertreter: **Seeger, Jan**
**c/o Kern & Co. AG**
**CH-5001 Aarau (CH)**

(54) **Vorrichtung zur stereoskopischen Betrachtung von Bildern auf einem Bildschirm.**

(57) Zur stereoskopi schen Betrachtung von Bildpaaren ist eine Okulareinheit (3) mit zwei Okularen (4, 5) vorhanden, welche mittels Führungen (6, 7, 8, 9) in eine Gebrauchslage oder in eine Ruhelage in der Nähe des Bildschirmes (2) geschwenkt werden kann.

Fig. 1

EP 0 348 354 A1

Bundesdruckerei Berlin

## Beschreibung

### Vorrichtung zur stereoskopischen Betrachtung von Bildern auf einem Bildschirm

Die Erfindung betrifft eine Vorrichtung zur stereoskopischen Betrachtung von Bildern auf einem Bildschirm mit einer Okulareinheit mit einem Okular für das linke Auge zur Betrachtung eines Teiles des Bildschirmes und einem Okular für das rechte Auge zur Betrachtung eines anderen Teiles des Bildschirmes.

Bei bekannten Vorrichtungen zur stereoskopischen Betrachtung von Bildpaaren auf einem Bildschirm werden das rechte und das linke Bild durch eine unterschiedliche Phasenlage ihres zeitlichen Auftretens, durch unterschiedliche Polarisation oder beides gekennzeichnet. Dabei ist eine Okulareinheit vorhanden, welche Jedes auf dem Bildschirm auftretende Bild entsprechend seiner Kennzeichnung dem zugehörigen Auge des Betrachters zuführt. Hierzu sind Lichtmodulatoren erforderlich. Verwendet man zur Wiedergabe der Bilder mit in unterschiedlichen Richtungen polarisiertem Licht eine Bildröhre, deren Frontscheibe mit einer Polarisationsfolie und einer Polymer-Flüssigkristallfolie gemäss EP-A2-264 927 (Standard Elektrik Lorenz AG) versehen ist, so genügt zur Betrachtung eine Okulareinheit mit entsprechenden Polarisationsfiltern.

Bei Verwendung einfacher, von photogrammetrischen Auswertegeräten her bekannter Okulareinheiten ist es auch möglich, auf dem Bildschirm das linke und das rechte Bild nebeneinander darzustellen und wie in einem Spiegelstereoskop zu betrachten.

Aufgabe der Erfindung ist es, eine Vorrichtung zur Betrachtung gemäss dem letztgenannten Verfahren anzugeben, welche bei Betrachtung von Bildern ohne Stereoeffekt in einfacher Weise in eine Ruhelage gebracht werden kann.

Als Lösung dieser Aufgabe ist eine Vorrichtung zur stereoskopischen Betrachtung der eingangs genannten Art dadurch gekennzeichnet, dass die Okulareinheit mittels Verbindungselementen mit dem Gehäuse des Bildschirmes verbunden ist, an denen sie sowohl in eine gegenüber dem Bildschirm feste Betrachtungslage vor dem Bildschirm als auch in eine Ruhelage neben oder hinter dem Gehäuse des Bildschirmes bewegbar ist. Als Verbindungselemente zwischen Okulareinheit und Bildschirmgehäuse sind mit Vorteil auf der rechten und linken Bildschirmseite je zwei Streben in Form je einer Parallelführung angelenkt. Zweckmässige Ausbildungen dieser Vorrichtung sind in den Patentansprüchen 3 bis 7 gekennzeichnet.

Die Erfindung wird nun anhand eines in den Figuren der Zeichnung schematisch dargestellten Ausführungsbeispiels naher erläutert. Es zeigen:

Fig. 1 eine Ansicht einer erfindungsgemässen Vorrichtung von der Seite,

Fig. 2 eine Ansicht der Vorrichtung gemäss Fig. 1 von oben und

Fig. 3 zwei ineinandergreifende Profile der Verbindungsstreben gemäss Fig. 1 und 2

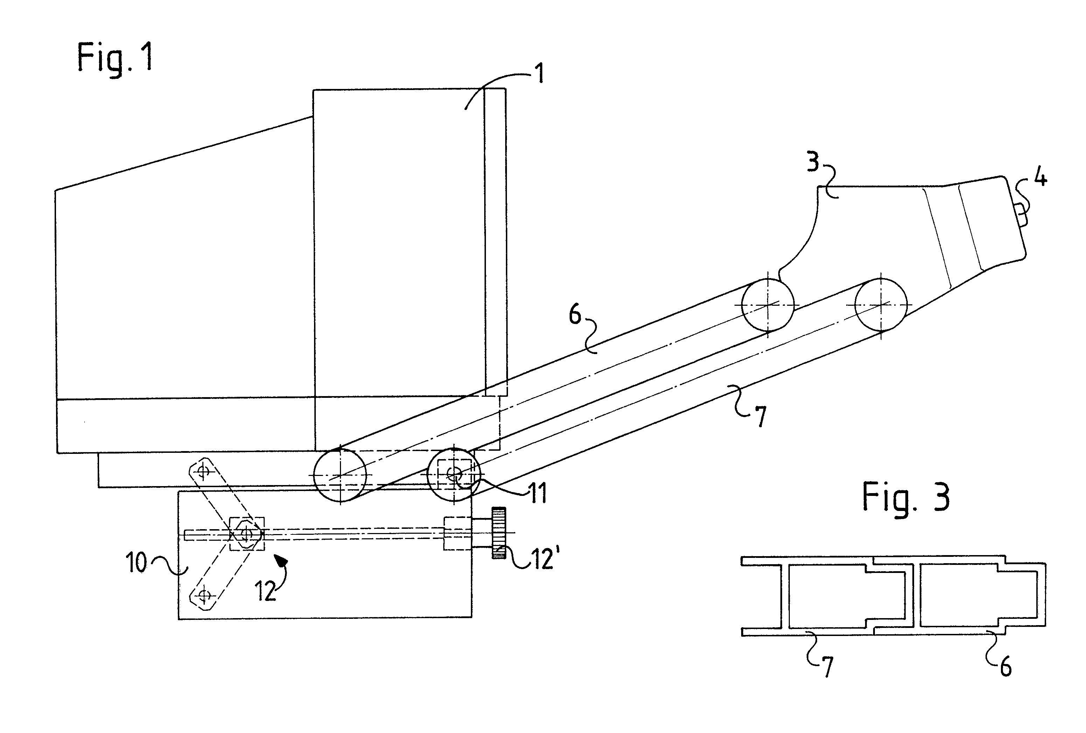

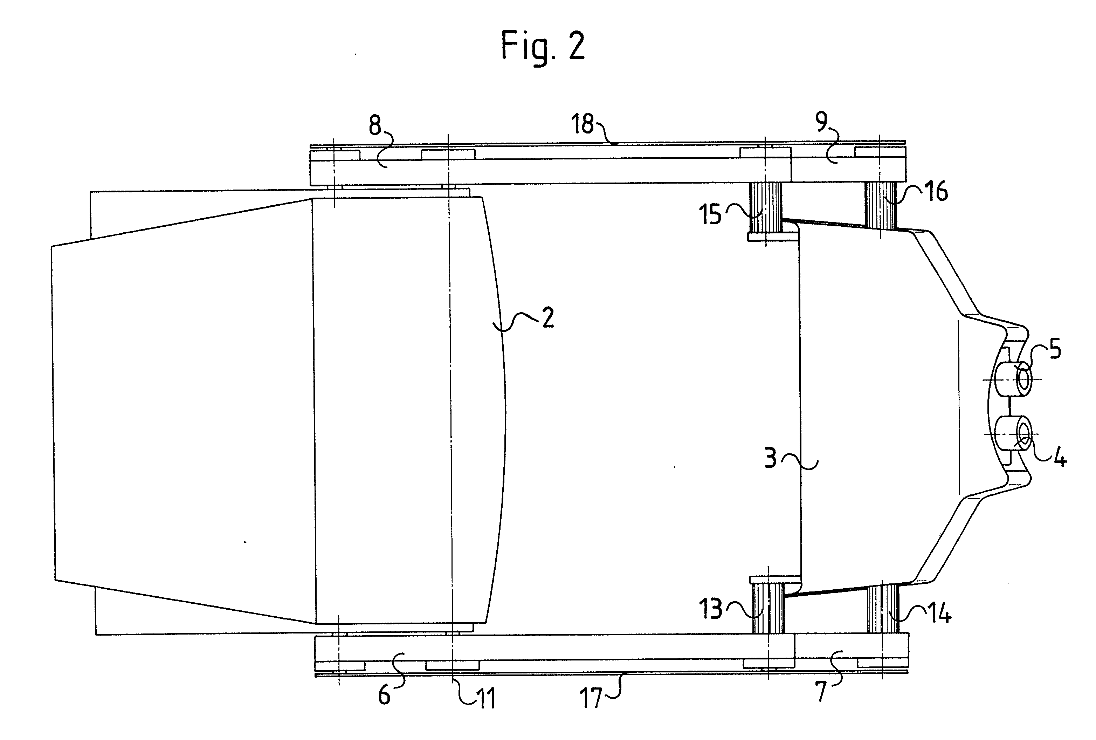

Fig. 1 zeigt in Seitenansicht ein Gehäuse eines Bildschirmes welcher mit einer Okulareinheit 3 betrachtet werden soll. Die Okulareinheit 3 umfasst, wie in der Draufsicht gemäss Fig. 2 genauer erkennbar, ein Okular 4 für das linke Auge und ein Okular 5 für das rechte Auge eines Beobachters. Die Okulareinheit 3 ist in an sich bekannter Art so ausgebildet, dass das Blickfeld des Okulars 4 in der dargestellten Betrachtungslage nur ein auf der linken Hälfte des Bildschirmes 2 dargestelltes Bild und das Blickfeld des Okulars 5 nur ein auf der rechten Bildschirmhälfte dargestelltes Bild eines Stereopaares erfasst. Diese Lage der Blickfelder ist aber nur dann gewährleistet, wenn die Okulareinheit 3 in ihrer gegenüber dem Bildschirm 2 festen Betrachtungslage verbleibt. Um dies sicherzustellen, ist die Okulareinheit 3 mittels je zweier rechts und links seitlich daran angelenkter Streben 6, 7 und 8, 9 gehalten. Jedes Strebenpaar 6, 7 und 8, 9 bildet eine Parallelführung zwischen der Okulareinheit 3 und dem Gehäuse 1 des Bildschirmes.

In der dargestellten Betrachtungslage der Streben 6, 7 und 8, 9 liegen die Streben 6, 7 und 8, 9 mit ihren Längsseiten aneinander an. Diese Lage der Okulareinheit 3 ist also eine stabile Grenzlage der Parallelführungen, in welcher die Okulareinheit 3 infolge ihres Eigengewichtes verbleibt. Die aneinanderliegenden Längsseiten der Streben 6, 7 und 8, 9 sind mit ineinandergreifenden Profilen versehen, welche Fig. 3 im Querschnitt zeigt. Dadurch ist die Betrachtungslage der Okulareinheit 3 zusätzlich in der waagerechten Richtung stabilisiert. Das Gehäuse 1 des Bildschirmes 2 ist auf einem Fundament 10 um eine waagerechte Achse 11 kippbar gelagert. Mittels eines Hebelgetriebes 12 kann man Bildschirm 2 und Okulareinheit 3 um die Achse 11 kippen und damit die Einblickhöhe der Okulare 4, 5 an die Position des Beobachters anpassen, ohne die Betrachtungslage der Okulareinheit 3 gegenüber dem Bildschirm 2 zu verändern. Die Achse 11 ist zweckmässig nahe dem Schwerpunkt des Systems Bildschirm 2 - Okulareinheit 3 angeordnet, damit die Neigungseinstellung am Drehknopf (12′) mit geringem Kraftaufwand erfolgen kann.

Wie in Fig 2 dargestellt, sind die Streben 6, 7 und 8, 9 an die Okulareinheit 3 über Achsteile 13, 14 und 15, 16 angelenkt, welche als Griffe ausgebildet sind. An diesen Griffen kann man die Okulareinheit 3 auf ihren Führungsstreben 6, 7 und 8, 9 nach oben und bis hinter das Bildschirmgehäuse 1 schwenken, wenn der Bildschirm nicht stereoskopisch betrachtet werden soll. In Fig. 2 sind Schutzblenden 17, 18 dargestellt, die von je einer Strebe 6 und 8 getragen werden und ein seitliches Hineingreifen zwischen die sich schliessenden Streben 6, 7 und 8, 9 verhindern.

### Patentansprüche

1. Vorrichtung zur stereoskopischen Betrachtung von Bildern auf einem Bildschirm (2) mit einer Okulareinheit (3) mit einem Okular (4) für das linke Auge zur Betrachtung eines Teiles des Bildschirms und einem Okular (5) für das rechte Auge zur Betrachtung eines anderen Teiles des Bildschirmes, dadurch gekennzeichnet, dass die Okulareinheit (3) mittels Verbindungselementen (6, 7, 8, 9) mit dem Gehäuse (1) des Bildschirmes (2) verbunden ist, an denen sie sowohl in eine gegenüber dem Bildschirm (2) feste Betrachtungslage vor dem Bildschirm als auch in eine Ruhelage neben oder hinter dem Gehäuse (1) des Bildschirmes (2) bewegbar ist.

2. Vorrichtung nach Anspruch 1, dadurch gekennzeichnet, dass als Verbindungselemente zwischen Okulareinheit (3) und Bildschirmgehäuse (1) auf der rechten und linken Bildschirmseite je zwei Streben (6, 7, 8, 9) in Form je einer Parallelführung angelenkt sind.

3. Vorrichtung nach Anspruch 2, dadurch gekennzeichnet, dass die Streben (6, 7, 8, 9) in der Betrachtungslage der Okulareinheit (3) vor dein Bildschirm (2) aneinander anliegen.

4. Vorrichtung nach Anspruch 3, dadurch gekennzeichnet, dass die Streben (6, 7, 8, 9) an ihren Längsseiten, welche gegenseitig zur Anlage kommen, mit ineinandergreifenden Profilen versehen sind.

5. Vorrichtung nach Anspruch 1, dadurch gekennzeichnet, dass das Bildschirmgehäuse (1) mit der damit verbundenen Okulareinheit (3) gegenüber einem Fundament (10) um eine waagerechte, zur Richtung vom Bildschirm (2) zum Betrachter senkrechte Achse (11) mittels Einstellmitteln (12, 12') kippbar ist, wobei die Achse (11) durch den Schwerpunkt von Bildschirmeinheit (1 2) und Qkulareinheit (3) in der festen Betrachtungslage oder nahe an diesem vorbeiläuft.

6. Vorrichtung nach Anspruch 2, dadurch gekennzeichnet, dass die Verbindungsstreben (6, 7, 8, 9) an der Okulareinheit (3) über Achsteile (13, 14, 15, 16) angelenkt sind, welche als Schwenkgriffe ausgebildet sind.

7. Vorrichtung nach Anspruch 3, gekennzeichnet durch Schutzblenden (17, 18), welche ein unbeabsichtigtes Hineingreifen zwischen die aneinander zur Anlage kommenden Streben (6, 7, 8, 9) verhindern.

Fig.1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-2 410 725 (A.P. FRANKLIN) <br> * Spalte 3, Zeilen 1-19; Spalte 6, Zeilen 38-51; Spalte 8, Zeilen 40-44; Figuren 1,14 * | 1,2 | G 02 B 27/22 |
| A | --- | 3,6 | |
| Y | GB-A-2 179 716 (G.E.C. AVIONICS LTD) <br> * Seite 2, Zeilen 22-55; Figur 1 * <br> --- | 1,2 | |
| A | US-A-4 527 766 (KRENZ) <br> * Zusammenfassung; Figuren 1,2 * <br> ----- | 5 | |

RECHERCHIERTE SACHGEBIETE (Int. Cl.4)

G 02 B
F 16 M

Der vorliegende Recherchenbericht wurde für alle Patentansprüche erstellt

| Recherchenort | Abschlußdatum der Recherche | Prüfer |
|---|---|---|
| DEN HAAG | 13-09-1989 | GRUNFELD M.Y.E. |